**Europäisches Patentamt**

**European Patent Office**

**Office européen des brevets**

(19)

(11) Publication number: **0 181 944**
**A1**

## EUROPEAN PATENT APPLICATION

published in accordance with Art. 158(3) EPC

(12)

(21) Application number: **85902633.8**

(22) Date of filing: **15.05.85**

Data of the international application taken as a basis:

(86) International application number: **PCT/JP 85/00268**

(87) International publication number: **WO 85/05472 (05.12.85 85/26)**

(51) Int. Cl.⁴: **G 05 B 19/18, B 23 Q 15/013**

(30) Priority: **18.05.84 JP 100313/84**

(43) Date of publication of application: **28.05.86 Bulletin 86/22**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **OTSUKI, Toshiaki, 4-10-7, Shinmei Hino-shi, Tokyo 191 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **SKIPPING DEVICE FOR DWELL.**

(57) The skipping device for the dwell enables the dwell to be terminated even when the dwell function is being executed according to the dwell instruction. A timer is prepared in a volatile memory (3) to operate for a period of time as instructed by the central processing unit (1) to execute the dwell. Further, a signal (8) is input from an external unit to instruct the termination of dwell. While the timer is operating, the dwell is executed by placing the machine tools (4-1, 4-2) under the stand-still condition. When the operation of the timer is terminated or when the signal (8) instruction to terminate the dwell is received, the machine tools (4-1, 4-2) are put into operation again, and the dwell is terminated.

- 1 -

**TITLE MODIFIED**
**see front page** S P E C I F I C A T I O N

DWELL SKIPPING DEVICE

TECHNICAL FIELD

The present invention relates to a numerical controller, and more particularly to a dwell skipping device which makes it possible to terminate halfway a command for a dwell function in the numerical controller.

BACKGROUND ART

In the case of controlling a machine tool through use of a numerical controller, it is necessary to provide what is called a dwell function which maintains the machine tool motionless for a predetermined interval during its cutting operation. The dwell function is needed, for example, for inserting a cutting chips removing step in the cutting operation, or for temporarily stopping the cutting operation at a specified position on a workpiece with a view to improving the cutting accuracy.

The dwell function has widely been utilized in numerical control. But the conventional dwell function is merely able to maintain the machine tool at a standstill for a commanded interval starting at a commanded time but unable to terminate the dwell arbitrarily.

In the actual machining step, however, the situation occasionally arises where it would be desirable to discontinue the dwell of the machine tool at a desired time before the end of a predetermined interval. Such a situation is encountered, for instance, in the cases where the amount of cutting chips produced is smaller than expected according to cutting conditions and where the necessity of suspending the cutting operation at a specified position on the workpiece diminishes owing to the quality of the workpiece.

But the prior art dwell function in numerical control is only to keep the machine tool out of operation for a commanded interval as referred to above, and even if the dwell function is no longer needed, the dwell cannot be terminated halfway.

DISCLOSURE OF THE INVENTION

The dwell skipping device of the present invention is designed so that although a numerical controller is performing the dwell function according to a dwell command, it enables the dwell to be terminated, as desired, by applying another command from the outside to the numerical controller to skip the dwell executing state.

The dwell skipping device of the present invention includes, in equipment for numerically controlling a machine tool according to a predetermined program under control of a central processor, a timer which operates for a period of time specified by a dwell execution command from the central processor and means for commanding the termination of the dwell from the outside. The dwell skipping device is adapted so that when the timer is in operation, it executes the dwell while keeping the machine tool at a standstill and upon completion of the operation of the timer or upon receiving a dwell termination command, it releases the machine tool from the standstill state, finishing the dwell.

According to the present invention, when a dwell skip command is issued during the execution of the dwell function according to a dwell command, the dwell can immediately be terminated, followed by the execution of the next command.

BRIEF DESCRIPTION OF THE DRAWINGS

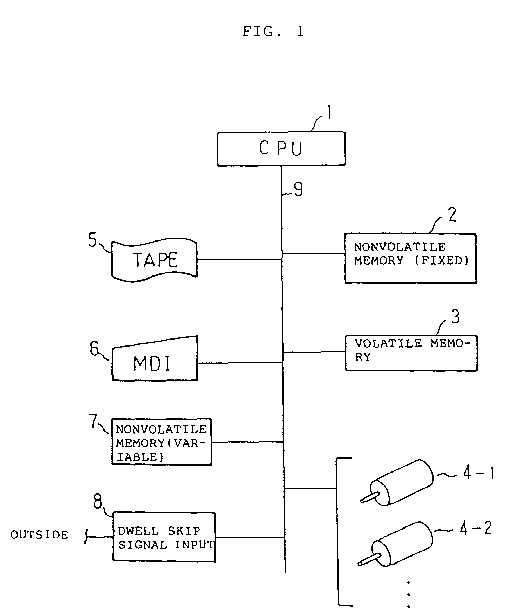

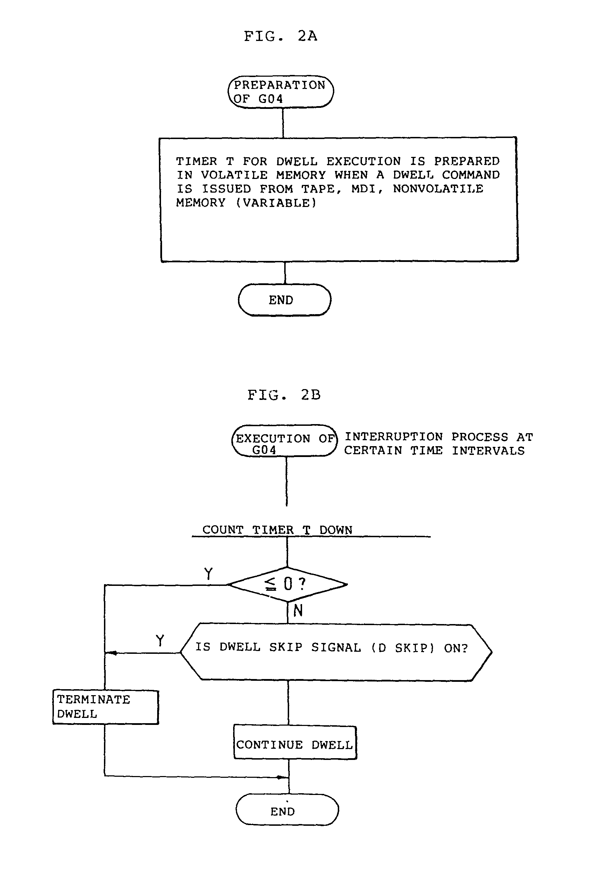

Fig. 1 is a diagram illustrating the arrangement of an embodiment of the dwell skipping device of the present invention; and Fig. 2 is a flowchart for explaining the preparation of dwell and the discontinuation of dwell during its execution in the device shown in Fig. 1.

BEST MODE FOR CARRYING OUT THE INVENTION

Fig. 1 illustrates the arrangement of the dwell skipping device of the present invention. In Fig. 1 reference numeral 1 indicates a central processing unit (CPU), 2 a fixed nonvolatile memory, 3 a volatile memory, 4-1, 4-2, ... motors, 5 a tape, 6 a manual data input device (MDI), 7 a variable nonvolatile memory, 8 a dwell skip signal input from the outside and 9 a bus.

Fig. 2 is a flowchart for explaining the preparation of dwell and the termination of dwell during its execution in the device depicted in Fig. 1, Fig. 2 A  showing the preparation of dwell and Fig. 2 B  the termination of dwell during its execution.

In Fig. 1, the CPU 1 reads via the bus 9 a program stored in the fixed nonvolatile memory 2 and controls via the bus 9 the motors 4-1, 4-2, ... which drive a machine tool, effecting predetermined numerical control of the machine tool not shown.

The execution of the dwell function in the course of such control is usually commanded by a step G04 in a series of instructions. That is, as shown in Fig. 2 A, a dwell command is preset in the tape 5, the variable nonvolatile memory 7 or the like and issued therefrom, or it is entered through the MDI 6 from the outside each time. Upon receiving the dwell command, the CPU 1 prepares a timer T of a commanded time in the volatile memory 3 via the bus 9.

Next, the CPU 1 starts the execution of the step G04 by an interruption process at certain time intervals. The CPU 1 stops the motors 4-1, 4-2, ... via the bus 9 and at the same time, counts the timer T down with a predetermined clock. When the value of the timer T decrements to zero, the CPU decides that the dwell has come to an end, and it puts the motors 4-1, 4-2, ... in operation, thus finishing the dwell.

On the other hand, the CPU 1 scans the dwell skip signal input 8 until the timer T completes its operation, and upon turning ON of a dwell terminating signal D SKIP, it performs a dwell terminating process. When the signal D SKIP is not ON, the dwell is kept on, in which case the dwell comes to an end when the value of the timer T decrements to zero.

In this way, the dwell skipping device of the present invention enables the dwell to be discontinued upon turning ON of the dwell terminating signal even when the timer for the execution of dwell is still in operation.

As described above, according to the present invention, the dwell can be terminated, as desired, by applying a command from the outside even when the numerical controller is performing the dwell function according to a dwell command.

- 6 -

CLAIM

A dwell skipping device for equipment which numerically controls a machine tool according to a predetermined program under control of a central processing unit, characterized by the provision of a timer which, when receiving a dwell execution command from the central processing unit, operates for a period of time specified by the command, and means for commanding the termination of the dwell from the outside, wherein while the timer is in operation, the machine tool is held at a standstill and the dwell is executed and upon completion of the operation of the timer or upon receiving a dwell terminating command, the machine tool is put in operation, thus discontinuing the dwell.

FIG. 1

FIG. 2A

PREPARATION OF G04

TIMER T FOR DWELL EXECUTION IS PREPARED IN VOLATILE MEMORY WHEN A DWELL COMMAND IS ISSUED FROM TAPE, MDI, NONVOLATILE MEMORY (VARIABLE)

END

FIG. 2B

EXECUTION OF G04    INTERRUPTION PROCESS AT CERTAIN TIME INTERVALS

COUNT TIMER T DOWN

$\leqq 0$ ?  —Y

N

IS DWELL SKIP SIGNAL (D SKIP) ON?  —Y

TERMINATE DWELL

CONTINUE DWELL

END

# INTERNATIONAL SEARCH REPORT

International Application No. PCT/JP85/00081 944

## I. CLASSIFICATION OF SUBJECT MATTER (if several classification symbols apply, indicate all) [3]

According to International Patent Classification (IPC) or to both National Classification and IPC

Int. Cl$^4$ G05B19/18, B23Q15/013

## II. FIELDS SEARCHED

| Minimum Documentation Searched [4] | |
|---|---|
| Classification System | Classification Symbols |
| IPC | G05B19/18-19/42, B23Q15/013-15/06 |

| Documentation Searched other than Minimum Documentation to the Extent that such Documents are Included in the Fields Searched [5] |
|---|
| Jitsuyo Shinan Koho      1926 - 1985 |
| Kokai Jitsuyo Shinan Koho    1971 - 1985 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | NC Handbook Henshu Iinkai-hen "NC Handbook" Shohan, 25 May 1972 (25.05. 72), Nikkan Kogyo Shinbunsha, P. 434 | 1 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| August 9, 1985 (09. 08. 85) | August 19, 1985 (19. 08. 85) |
| International Searching Authority [1] | Signature of Authorized Officer [20] |
| Japanese Patent Office | |

Form PCT/ISA/210 (second sheet) (October 1981)